Europäisches Patentamt

European Patent Office

Office européen des brevets

(11) Veröffentlichungsnummer: **0 229 610 B1**

# (12) EUROPÄISCHE PATENTSCHRIFT

(45) Veröffentlichungstag der Patentschrift: **08.04.92**

(21) Anmeldenummer: **87100030.3**

(22) Anmeldetag: **02.01.87**

(51) Int. Cl.⁵: **B29B 9/06**

(54) Vorrichtung zum Granulieren von Strängen aus thermoplastischen Kunststoffen.

(30) Priorität: **10.01.86 DE 3600567**

(43) Veröffentlichungstag der Anmeldung:
**22.07.87 Patentblatt 87/30**

(45) Bekanntmachung des Hinweises auf die
Patenterteilung:
**08.04.92 Patentblatt 92/15**

(84) Benannte Vertragsstaaten:
**AT BE CH DE ES FR GB IT LI NL**

(56) Entgegenhaltungen:
**DE-A- 2 600 078**
**DE-A- 3 145 613**
**US-A- 4 219 291**

(73) Patentinhaber: **AUTOMATIK Apparate-
Maschinenbau GmbH
Ostring 19
W-8754 Grossostheim 2(DE)**

(72) Erfinder: **Hunke, Friedrich, Dipl.-Ing.
Westring 38
W-8754 Grossostheim 2(DE)**

(74) Vertreter: **Bardehle, Heinz, Dipl.-Ing. et al
Patent- und Rechtsanwälte Bardehle-
Pagenberg-Dost-Altenburg-Frohwitter und
Partner Galileiplatz 1 Postfach 86 06 20
W-8000 München 86(DE)**

## Beschreibung

Die Erfindung bezieht sich auf eine Vorrichtung zum Granulieren von Strängen aus thermoplastischen Kunststoffen, die aus mehreren in einer Reihe nebeneinander angeordneten Düsen schmelzflüssig austreten, mit einer auf ein Gegenmesser wirkenden Schneidwalze und einer vor der Schneidwalze angeordneten, mit Kühlwasser beschickten Zuführeinrichtung.

Eine derartige Vorrichtung ist aus der DE-PS 2 503 455 bekannt. Bei dieser bekannten Vorrichtung besteht die Zuführeinrichtung aus einer Ablaufrinne, deren oberes Ende mit einem Kühlwasserzulauf versehen ist und dessen unteres Ende vor dem Einzugsspalt eines Einzugswalzenpaares endet, hinter dem die Schneidwalze mit Gegenmesser angeordnet ist. Außerdem kann die Ablaufrinne mit Kühlwasser besprüht werden. Mit dieser Vorrichtung können thermoplastische Kunststoffe zu Zylindergranulat granuliert werden, deren Viskosität unmittelbar hinter dem Austritt aus den Düsen ganz extreme Werte annehmen kann. Ermöglicht wird diese Universalität durch die Ablaufrinne, mit der sich in weitem Bereich gewünschte Kühlungen erzielen lassen. Die Arbeitsweise dieser Vorrichtung wird als Kaltgranulierverfahren bzeichnet, bei dem die Verfahrensschritte Extrudieren - Kühlen - Schneiden in dieser Reihenfolge hintereinandergeschaltet sind (siehe "Granulieren von thermoplastischen Kunststoffen, Seite 139, VDI-Verlag GmbH).

Es ist weiterhin das sogenannte Heißgranulierverfahren bekannt, bei dem die einzelnen Verfahrensschritte folgendermaßen aufeinanderfolgen: Extrudieren - Schneiden - Kühlen. Eine nach diesem verfahren arbeitende Vorrichtung ist aus der DE-PS 2 809 680 bekannt. Das typische an dieser Verfahrensweise und dementsprechend an der Vorrichtung ist, daß ein Messerrotor mit seinen Messern die Düsenoberfläche unter Berührungskontakt überstreicht, wobei also die Düsen das Gegenmesser für den Messerrotor bilden. Hierbei entsteht Linsengranulat. Gemäß der DE-PS 2 809 680 ist der Messerrotor als Walzenfräser mit wendelförmig verlaufenden Schneiden ausgebildet. Da bei diesem Verfahren das jeweilige Messer in noch schmelzflüssigen Kunststoff schneidet, läßt sich dieses Verfahren nur bei wenigen Kunststoffen anwenden, z. B. bei Polystyrol. Bei diesem Verfahren wird zwar der Aufwand einer besonderen Kühlstrecke zwischen dem Extrudieren und dem Schneiden vermieden, jedoch erfordert die Wirkung der Düsen als Gegenmesser deren besondere Ausbildung, insbesondere aus hartem Material.

Es gibt schließlich eine weitere Gattung von Granuliervorrichtungen, bei denen zwischen die Düsen und den Messerrotor kurze Kühlrohre geschaltet sind. Ein Beispiel hierfür ist die in der DE-OS 28 14 113 offenbarte Vorrichtung, bei der die Kühlrohre einen gegenüber dem Querschnitt der aus den Düsen austretenden Stränge etwas vergrößerten Innenquerschnitt aufweisen, wobei der sich zwischen der Oberfläche der Stränge und der Innenwandung der Kühlrohre ausbildende Zwischenraum durch einen zylindermantelförmig strömenden Kühlwassermantel ausgefüllt wird. Eine andere Ausführungsform ist in der US-PS 3 792 950 offenbart, bei der die Kühlrohre aus Sintermetall bestehen, durch das Kühlwasser hindurch gepreßt wird, so daß sich zwischen den durch die Rohre hindurchgeführten Stängen ein dünner Wasserdampfmantel ausbildet, der für die Kühlung der Stränge sorgt und gleichzeitig deren Ankleben an die Innenwandung der Rohre verhindert.

Der Erfindung liegt die Aufgabe zugrunde, den bisher erforderlichen Aufwand für besondere Kühlstrecken weitgehend zu beseitigen, ohne dabei aber die Beschränkung hinsichtlich des Anwendungsumfangs hinnnehmen zu müssen, wie er den Heißgranuliervorrichtungen anhaftet.

Erfindungsgemäß wird das Problem dadurch gelöst, daß die Zuführeinrichtung aus der etwa radial zur Schneidwalze stehenden Stützfläche des Gegenmessers besteht, die den Zwischenraum zwischen Düsenoberfläche und Schneidwalze im wesentlichen vollständig ausfüllt.

Überraschenderweise hat sich gezeigt, daß für einen weiten Bereich von thermoplastischen Kunststoffen zur Schaffung von Zylindergranulat eine Kühlstrecke ausreichend ist, die lediglich aus der Stützfläche des für die Schneidwalze sowieso notwendigen Gegenmessers besteht, das damit doppelt ausgenutzt wird, nämlich einerseits zur Stützung der Stränge beim Durchlaufen dieser besonders kurzen Kühlstrecke und andererseits zum Schneiden als mit der Schneidwalze zusammenwirkendes Gegenmesser. Die Ausnutzung der Stützfläche in diesem Sinne hat weiterhin den Vorteil, daß der Bereich zwischen Düsenoberfläche und Schneidwalze gut zugänglich bleibt, was bei aus Rohren bestehenden Kühlstrecken nicht der Fall ist. Es wird durch die Erfindung somit eine Gattung von Granuliervorrichtungen geschaffen, die prinzipiell nach dem Kaltgranulierverfahren arbeiten, dabei aber mit minimalem Aufwand auskommen.

Dieses Gestaltungsprinzip, bei dem, wie schon gesagt, das Gegenmesser doppelt ausgenutzt wird, ist bisher überhaupt nicht in Betracht gezogen worden, seine Wirksamkeit in einem weiten Bereich von Kunststoffen muß daher als überraschend angesehen werden. Gegenüber dem Heißgranulierverfahren ergibt sich bei der Anwendung der erfindungsgemäßen Vorrichtung noch der wesentliche Vorteil, daß der beim Heißgranulierverfahren erforderliche Berührungskontakt zwischen den Messern und der Düsenoberfläche nicht erforderlich ist, der eine besonders sorgfältige Einstellung erfordert, um einerseits den Berührungskontakt tatsächlich herzustellen, andererseits aber eine zu starke Reibung zu vermeiden, die schnell zu einer Überhitzung der Messer führt. Bei der erfindungsgemäßen Vorrichtung ist ein Berührungskontakt zwischen Schneidwalze und Gegenmesser nicht erforderlich, er wird beim Kaltgranulierverfahren auch nicht angewendet, da Schneidwalze und Gegenmesser auf an der Oberfläche bereits verfestigte Kunststoffstränge treffen, die sich auch bei geringem Abstand zwischen Schneidwalze und Gegenmesser schneiden lassen. Diese Abstände liegen bei bis zu etwa 0,03 mm.

Zur Beschickung des Gegenmessers mit Kühlwasser ordnet man zweckmäßig der Stützfläche des Gegenmessers gegenüber Sprühdüsen an. Die von diesen Sprühdüsen auf die Stützfläche gerichteten Kühlwasserstrahlen hüllen die über die Stützfläche geleiteten Stränge in einen Sprühnebel ein, wobei das Kühlwasser auch in ausreichender Weise hinter die Stränge gelangt und somit einerseits ein Ankleben der Stränge am Gegenmesser und andererseits eine ausreichende Kühlung der Oberfläche der Stränge bewirkt.

Es ist auch möglich, die Beschickung des Gegenmessers mit Kühlwasser dadurch herbeizuführen, daß ein Kühlwasserstrom auf die Schneidwalze gerichtet wird, die das Kühlwasser abschleudert und dabei auf die Stützfläche des Gegenmessers sprüht. Diese Maßnahme kann für sich allein oder auch zusammen mit den Sprühdüsen angewendet werden. In jedem Fall ergibt sich dabei der das Gegenmesser beaufschlagende Kühlwassernebel, der insofern noch erwünscht ist, als er nur eine Kühlwirkung entfaltet, nicht aber zu einer Deformation der Stränge führt. Zweckmäßig gibt man den Strängen im Bereich des Gegenmessers eine besondere Führung, und zwar dadurch, daß das Gegenmesser mit Führungsrillen für die Stränge versehen wird. Hierdurch wird vermieden, daß die Stränge seitlich auswandern und dadurch eventuell miteinander verkleben können. Im übrigen ergeben sich durch die Führungsrillen Kühlwasserbäder für die Stränge, was der Intensität der Kühlung zugute kommt.

In den Figuren ist ein Ausführungsbeispiel der Erfindung dargestellt. Es zeigen

    Figur 1 -    die Vorrichtung in prinzipieller Darstellung im Schnitt

    Figur 2 -    ein Gegenmesser mit Führungsrillen und von diesen geführten Kunststoffsträngen

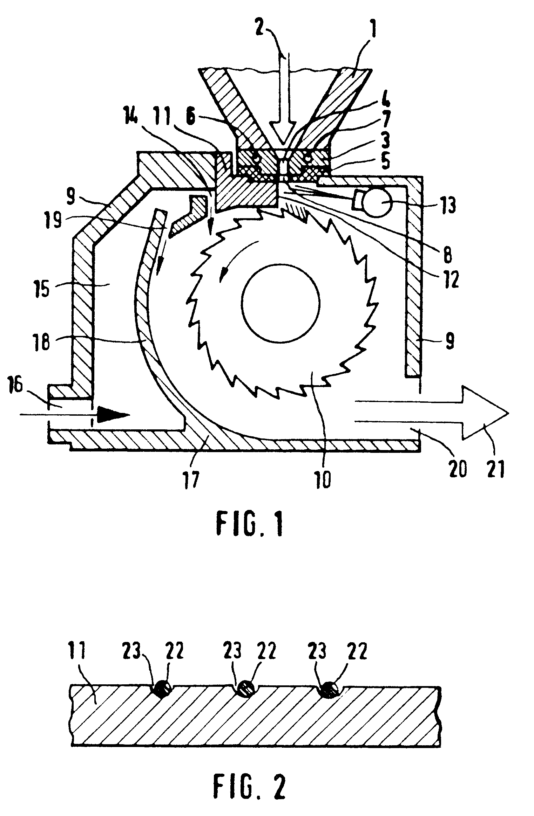

Figur 1 zeigt den Zuführungstrichter 1 für die Zuführung von flüssigem Kunststoff, der den Zuführungstrichter 1 in der Richtung des eingezeichneten Pfeiles 2 durchläuft. Der Zuführungstrichter 1 besitzt an seinem unteren Ende die Düsenplatte 3, die eine Reihe von nebeneinander geordneten Düsen enthält, von denen hier nur die Düse 4 sichtbar ist. Die Düsen in der Düsenplatte 3 liegen also gemäß der Darstellung in Figur 1 in Blickrichtung hintereinander. Die Düsenplatte 3 ist an ihrer Unterseite mit der kreuzschaffierten Isolierung 5 versehen, die dafür sorgt, daß der Düsenplatte durch die darunter angeordneten Bauteile nur wenig Wärme entzogen werden kann. Um eine ausreichende Temperatur der Düsenplatte 3 aufrecht zu erhalten, in ihr die Heizelemente 6 und 7 angeordnet. Die Isolierung 5 besitzt eine gegenüber der Düse 4 erweiterte Öffnung 8, so daß durch die Düse 4 hindurchtretender schmelzflüssiger Kunststoff nicht an der Isolierung 5 festkleben kann.

Der Zuführungstrichter 1 mit der Düsenplatte 3 und der Isolierung 5 sitzt auf dem Gehäuse 9 auf, daß die für das Granulieren erforderlichen Bauteile umgibt. Diese bestehen aus der Schneidwalze 10 und dem Gegenmesser 11, daß hier in die Wandung des Gehäuses 9 einbezogen ist. Die aus den Düsen 4 austretenden Stränge durchlaufen die Öffnung 8 in der Isolierung 5 und laufen über die Stützfläche 12 des Gegenmessers 11, bis sie zu der Schneidwalze 10 gelangen, von der sie dann in bekannter Weise zu Granulat zerschnitten werden.

In dem Gehäuse 9 ist die Sprühdüse gegenüber der Stützfläche 12 des Gegenmessers 11 angeordnet, die Kühlwasser auf die Stützfläche sprüht, womit die über die Stützfläche 12 geleiteten Kunststoffstränge gekühlt werden. Durch das Aufsprühen des Kühlwassers wird vor der Stützfläche 12 ein Kühlwassernebel erzeugt, der die Stränge allseitig umgibt, diese kühlt, ohne dabei zu einer Deformation der Stränge zu führen.

Die somit durch die Stützfläche des Gegenmessers gebildete Kühlstrecke, die hier vollständig den Zwischenraum zwischen der Oberfläche der Isolierung 5 und der Schneidwalze 10 ausfüllt, ist etwa 10 mm lang. Diese Länge reicht, um die Kunststoffstränge an ihrer Oberfläche so weit zu verfestigen, daß sie von der Schneidwalze 10 zu Granulat zerschnitten werden können, ohne daß dieses aneinander anklebt, was außerdem durch einen Kühlwasserzulauf verhindert wird, der durch die Öffnung 14 austritt und auf die Schneidwalze gerichtet ist. Hierauf wird weiter unten näher eingegangen. Die Länge der durch die Stützfläche 12 gebildeten Kühlstrecke kann etwa 5 - 30 mm betragen.

In das Gehäuse 9 ist der Wasserbehälter 15 eingebaut, dem das Wasser über die Eintrittsöffnung 16 zugeleitet wird. Gebildet wird der Wasserbehälter im wesentlichen durch den Boden 17 des Gehäuses 9, die an die Eintrittsöffnung 16 anschließende Wand des Gehäuses 9 und die Innenwand 18. Im Wasserbehälter 15 steigt das Wasser hoch und gelangt zu dem Schlitz 19 und der Öffnung 14, aus welch letzteres der Schneidwalze 10 zugeleitet wird. Das aus dem Schlitz 19 austretende Kühlwasser fließt auf der Schneidwalze 16 zugewandten Seite der Innenwand 18 herab, wird danach über den Boden 17 geleitet und tritt zusammen mit dem Granulat aus dem Auslaß 20 aus, und zwar in Richtung des eingezeichneten Pfeils 21. Das über die Innenwand 18 und den Boden 7 geleitete Kühlwasser schwemmt das erzeugte Granulat aus dem Gehäuse 9 auf diese Weise heraus.

Das der Schneidwalze 10 über die Öffnung 14 zugeleitete Kühlwasser wird von der Schneidwalze 10 mitgewirbelt und von dieser wieder weggeschleudert, wobei ein wesentlicher Teil dieses Wassers auf die Stützfläche 12 des Gegenmessers 11 sprüht, was durch die eingezeichneten Striche vor der Stützfläche 12 angedeutet ist. Auf diese Weise wird also auch mittels der Schneidwalze 10 die Stützfläche 12 mit Kühlwasser besprüht. Je nach Bedarf an Kühlung kann man entweder die Sprühdüse 13 oder das Besprüchen durch von der Messerwalze 10 abgeschleudertes Kühlwasser verwenden, es ist aber natürlich auch möglich, beide Sprühmethoden gleichzeitig vorzusehen.

Figur 2 zeigt einen Schnitt durch das Gegenmesser 11, das hier auf seiner den Strängen 22 zugewandten Seite mit den Führungsrillen 23 versehen ist, von denen die Stränge 22 geführt werden, so daß diese im Bereich zwischen der Düse 4 und dem Schneidmesser 10 nicht seitlich auswandern können.

### Patentansprüche

1. Vorrichtung zum Granulieren von Strängen aus thermoplastischen Kunststoffen, die aus mehreren in einer Reihe nebeneinander angeordneten Düsen schmelzflüssig austreten, mit einer auf ein Gegenmesser wirkenden Schneidwalze und einer vor der Schneidwalze angeordneten, mit Kühlwasser beschickten Zuführeinrichtung,
**dadurch gekennzeichnet**, daß
die Zuführeinrichtung aus der etwa radial zur Schneidwalze (10) stehenden Stützfläche (12) des Gegenmessers (11) besteht, die den Zwischenraum zwischen Düsenoberfläche und Schneidwalze (10) im wesentlichen vollständig ausfüllt und auf die das Kühlwasser aufgesprüht wird.

2. Vorrichtung nach Anspruch 1, dadurch gekennzeichnet, daß der Stützfläche (12) des Gegenmessers (11) gegenüber Sprühdüsen (13) angeordnet sind.

3. Vorrichtung nach Anspruch 1 oder 2, dadurch gekennzeichnet, daß ein Kühlwasserstrom auf die Schneidwalze (10) gerichtet ist, die das Kühlwasser abschleudert und dabei auf die Stützfläche (12) des Gegenmessers (11) sprüht.

4. Vorrichtung nach einem der Ansprüche 1 bis 3, dadurch gekennzeichnet, daß das Gegenmesser (11) mit Führungsrillen (23) für die Stränge (22) versehen ist.

### Claims

1. A device for the granulation of strands of thermoplastic plastics, which emerge in molten state from a plurality of nozzles which are arranged in a row adjacent to each other, with a cutting roller acting on a counter blade, and with a feed mechanism which is arranged in front of the cutting roller and is charged with cooling water,
characterised in that
the feed mechanism consists of the support surface (12) of the counter blade (11) standing approximately radially to the cutting roller (10), which substantially completely fills the intermediate space between the nozzle surface and the cutting roller (10) and on which the cooling water is sprayed.

2. A device according to Claim 1, characterised in that spray nozzles (13) are arranged opposite the support surface (12) of the counter blade (11).

3. A device according to Claim 1 or 2, characterised in that a stream of cooling water is directed onto the cutting roller (10), which centrifuges the cooling water and thereby sprays it onto the support surface (12) of the counter blade (11).

4. A device according to one of Claims 1 to 3, characterised in that the counter blade (11) is provided with guide grooves (23) for the strands (22).

### Revendications

1. Dispositif pour granuler des boudins de matière thermoplastique qui sortent en fusion de plusieurs filières disposées en une rangée les unes à côté des autres, avec un cylindre de coupe agissant sur une contre-lame et avec un dispositif d'alimentation disposé avant le cylindre de coupe et approvisionné en eau de refroidissement,
**caractérisé** en ce que le dispositif d'alimentation est constitué par la face d'appui (12) de la contre-lame (11), face qui est disposée approximativement radialement au cylindre de coupe (10), qui remplit sensiblement totalement l'espace intermédiaire entre la surface des filières et le cylindre de coupe (10), et sur laquelle est pulvérisée l'eau de refroidissement.

2. Dispositif selon la revendication 1, caractérisé en ce que des buses de pulvérisation (13) sont disposées en vis-à-vis de la face d'appui (12) de la contre-lame (11).

3. Dispositif selon la revendication 1 ou 2, caractérisé en ce qu'un flux d'eau de refroidissement est dirigé sur le cylindre de coupe (10), qui entraîne l'eau de refroidissement et la pulvérise sur la face d'appui (12) de la contre-lame (11).

4. Dispositif selon l'une des revendications 1 à 3, caractérisé en ce que la contre-lame (11) est pourvue de rainures de guidage (23) pour les boudins (22).

FIG. 1

FIG. 2